# DEMANDE DE BREVET EUROPEEN

(11) **EP 2 495 172 A1**
(43) Date de publication de la demande: **05.09.2012**
(21) Numéro de dépôt: 11001775.3
(22) Date de dépôt: 03.03.2011
(51) Int. Cl.: B64G 1/40

(54) **Principe de propulsion à froid pour engin spatial**

(71) Demandeur: Todaro, Vincenzo, 98030 Trappitello, Taormina (ME) (IT)
(72) Inventeur: Todaro, Vincenzo, 98030 Trappitello, Taormina (ME) (IT)

(57) **Abrégé**

Jusqu'à maintenant pour obtenir l'élevation des raquettes destinées à l' espace et pour vaincre la gravité terrestre sontes été nécessaire des engines assez volumineux et lourds , disont que ça était la prémiere fase de cette grande adventure que est la conquête de l'éspace. Avec la nouvelle systeme de propulsion à froid tout çela changera, en premier parce que regard la pollution , acoustique, fumé, co2 etc, tous se passera électriquement ça veux dire avec electro-magnetisme et idrogène, ou autre gaz très froids. Ça sera de grande soulagement pour tout le monde et pour la planet entière. Pour le décollage et atterrisage ne seront plus necessaire de lieux établie.

Elle est très versatile, avec un simple joy-stick on peut la conduire. Pratiquemente tous changera , un nouveau temp s'annonce en ligne avec le sens actuel « new -age » tous séra plus simple, et surtout la gravité ne séra plus un problème cette grande lacune séra comblée souhaitons que ça se passera a brève terme, dans l'interesse de tous et surtout de la santé de notre Planete avec vraiment des coûtes très limités .

## Description

Pour obtenir l'élevation des avions- navettes pour l'èspace non plus avec la systeme traditionnel par réacteur à turbine mais avec le très innovative système à propulsion à froid. Le système est basé sur une chambre magnétique avec des bouches a soupapes en haut et en bas réglables 4-5, à l'enterieur de laquelle une tourbine 2 reste en lévitation magnetique ayant un numero de pales pair et sans un centre méccanique mais tournant au centre autour dans très large tube 3 que à la double function de évacuation de l'air 9 et des ouvertures d'acces de l'équipage, çela devisé par une fermature à soupape etance 7 ; des qui vienne actioné la turbine on ouvrera par première les soupapes en bas 5 (evacuation), "voire dessines" , et des-que on ouvre celles en haute (aspiriation) 4, l'engine par l'effect de décompression elle sera litteramente resouchée dans le turbion conique que se créera au dessus, aidé par la pousser de la sortie centrale 9 et les bouches en bas d'évaquation 5 pretes de sont perimètre, une sistème de compensation automatique réglera le "contresense" que la coque va récevoir, à ca il faut ajuter que des gaz pres du zero absolut, (Idrogene o autres) seront injecter à l'interieur de la chambre magnetique pour augmenter l'effect de précipitation de l'air et raffroidire les pales de la turbine, à l'exterieur ce produiront des effects lumineux et electrostatique colorés selon les gaz utilisés, orange, violet, verte etc. de que l'engine attegnera la hauteur de 300 -500 mt. elle assumera sa function dell'aile par laquelle elle est concu ; la turbine ayant un marge suffisant de mouvement : au périmetre et au centre, à la comande elle récevra des coups excentriques à « saccade » que lui emprimeront la direction choisi, les trois effects en sinergie, l'élanceront vers l'exterieure de l'atmosphère avec une vitesse plus que souffisant pour vaincre la gravité,dans quelques instants elle gagnera l'orbite terrestre ou autres directions choisi : ça grande versatilité lui permettera de faire n'importe quel movement, accélérer décelerer, aussi des zig-zag soit à l' interieur que all'exterieur de l'atmosfhere, avec des possibilités ancore toutes a découvrir sûrement pret de la vitesse de la lumière?!

Sa coque est couverte biensûr au dessus et au dessous avec des panneaux solaires lui donneront totale autonomie, elle peût effectuer aussi des voles de service sous la planet a 200 Km. du sol : toutes destinations lui seront abordables dans l'ordre de quelques diziennes des minutes.

### Principe de propulsion à froid pour engines spaciales.

### (Motivationes theoriques)

On peut expliquer cet fenomen en première réprenat la lois de Archimède sur les liquide et dans notre cas les gaz, avec la non petite différence que l'air déplaée est pas sufficentment lourde que l'eau, donc c'est nécessaire que la machine même enanglouties une telle quantité qui puisse egalé son poid et même plus pour pouvoir ce soustente et gaigner la surface de l'atmosphere la antroposphere, come si elle étié submergée au fond dans ocean d'air ; pour le rest on peut s'appeller à Newton aux lois sur à la mécanique de corps en mouvement ,et aussi à celle de Bose-Einstein , de ces dérniers, sûrement sérà sa première application pratique !

### Principe de propulsion a froid pour angines spatiales

1 chambre magnetique de decompression a froid
2 turbine en levitation magnetique
3 tube controle pour evacuation gaz e acces
4 conduits aspiration d'aire
5 conduits evacuation aire gaz
6 differentes serbatoires gaz
7 soupape divisoire evacuation en bas acces personnel
8 cabine pilotage
9 evacuation centrale-acces- sortie personnel
10 Injecteurs differentes gaz

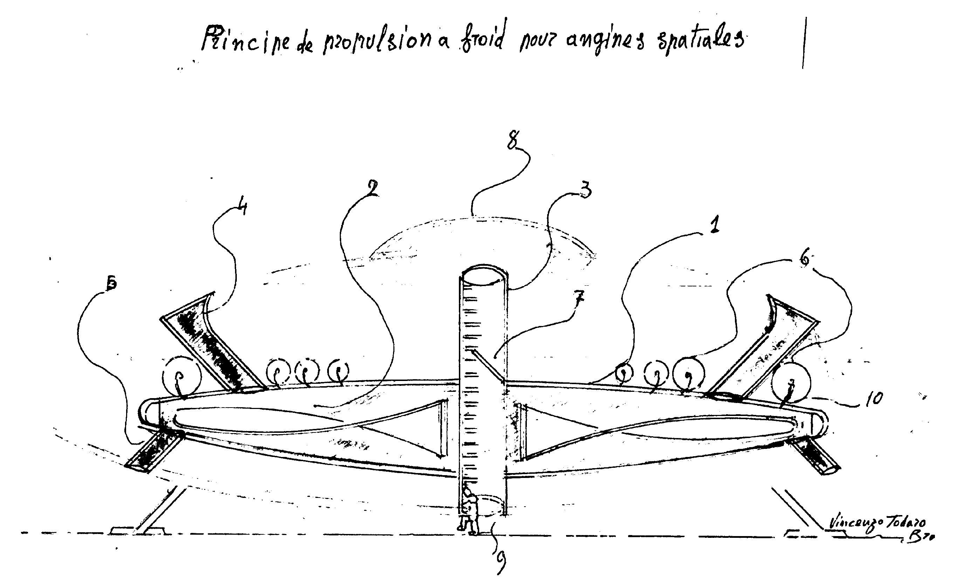

## Revendications

1. système à décompression à gaz froid absulement innovative pour produire des effects de decompression ou dessus des engines spaciales

2. propultion par turbine à lévitation électromagnetique

3. mouvement de la turbine, exentrique à "saccade" tres innovative que permette l'élancement de n'importe quelle engine volant

4. aile circulière couverte de pannaux solaire permettant l'autonomie à l'engine

5. systéme accélération - décceleration sois en atmosphère que au déhors ça permettera finalment des voyages dans l'éspace avec des vitesse proche de celle de la lumière .

6. système de compensation d'ou contresense que la turbine imprime à la coque.

7. couverture de l'engine par panneaux solaires lui permettant autonomie à l'interieur et en dehors de l'atmosphère combinée avec des accumulateurs.
